# EUROPEAN PATENT SPECIFICATION

(11) **EP 0 976 606 B1**
(45) Date of publication and mention of the grant of the patent: **16.06.2004**
(21) Application number: 99114857.8
(22) Date of filing: 29.07.1999
(51) Int. Cl.: B60N 2/20, B60N 2/22

(54) **Seat reclining system**
Neigungsverstellsystem für einen Sitz
Système d'inclinaison de siège

(30) Priority: 30.07.1998 JP 21501298
(43) Date of publication of application: 02.02.2000
(73) Proprietor: FUJI KIKO COMPANY LIMITED, Tokyo 103-0023 (JP)
(72) Inventor: Sugimoto, Kunihisa, c/o Fuji Kiko Co., Ltd., Kosaishi, Shizuoka 431-0431 (JP)
(74) Representative: Grünecker, Kinkeldey, Stockmair & Schwanhäusser Anwaltssozietät

(56) References cited:
- EP-A- 0 469 969
- EP-A- 0 938 997
- DE-A- 3 828 659
- GB-A- 1 046 893
- US-A- 3 008 765

## Description

This invention relates to a seat reclining system according to the preamble of claim 1.

Such a seat reclining system is generally known from the prior art. Said seat reclining system comprises a stationary base plate and a center shaft which is fixed to the base plate. Moreover, said system comprises a toothed plate which is rotatably mounted on the center shaft and a seat back which is fixed to the toothed plate. The toothed plate has a first teeth portion which extends along, in plan and a circle whose center corresponds to an axis of the center shaft. The toothed plate is formed at its periphery with a stop face. The seat reclining system further comprises a toothed member which has a second teeth portion which is engageable with the first teeth portion, an operating lever for causing the toothed member to move to be disengageable from the first teeth portion and a biasing mechanism for always biasing the seat back in a direction to fall forward.

Seat reclining systems have been proposed in Japanese Patent Provisional Publication Nos. 8-19444 and 10-71041 and put into practical use for the purpose of realizing a comfortable posture and an optimum driving posture of a passenger of an automotive vehicle, in which an inclination angle of a seat back of a vehicular seat is made adjustable. A typical one of such seat reclining systems includes a stationary base plate to which a center shaft is fixed. A toothed plate is rotatably mounted on the center shaft. A seat cushion is fixed to the toothed plate. The toothed plate has a teeth portion extending along, in plan, a circle whose center corresponds to the axis of the center shaft. A toothed member is provided to have a teeth portion which is engageable with the teeth portion of the toothed plate. The toothed member is moved to be disengageable from the teeth portion of the toothed plate under the action of an operating lever. The seat back is always biased in a direction to fall forward.

With the thus arranged seat reclining system, when the engagement between the teeth portion of the toothed plate and the teeth portion of the toothed member is released by operating the operating lever, the seat back falls forward so that a desired inclination angle of the seat back can be selected. Returning the operating lever to its original position causes the teeth portions of the toothed plate and the toothed member to engage with each other to make a locking, thereby maintaining the desired inclination angle of the seat back.

In addition to the above, it has been also proposed that the above seat reclining system is provided with a mechanism for causing the seat back to take a so-called full-flat position where the seat back is brought generally into alignment with the seat cushion. When the operating lever is operated to release the engagement between the teeth portions of the toothed plate and the toothed member, the seat back can fall forward under the biasing force applied to the seat back.

However, drawbacks have been encountered in such a conventional seat reclining system. That is, when the engagement between the teeth portions of the toothed plate and the toothed member is released to establish an unlocking condition, the seat back unavoidably falls forward at a high speed since the biasing force is being applied to the seat back. Consequently, the face or the like of the operator may be struck with the seat back if the operator carelessly operates the operating lever. In order to solve such drawbacks, it has been proposed that the seat back slowly falls forward under the action of a damper when the locking condition is released by operating the operating lever. However, this requires the damper and therefore complicates the structure of the seat reclining system while raising a production cost. Additionally, this requires a considerable time to obtain a complete fall-forward position of the seat back.

It is an object of the present invention to provide an improved seat reclining system for a vehicular seat, which can effectively overcome drawbacks encountered in conventional seat reclining systems for vehicular seats.

Another object of the present invention is to provide an improved seat reclining system for a vehicular seat, which can effectively prevent a seat back of the vehicular seat from rapidly falling forward toward its full fall-forward position immediately when an operating lever is operated by an operator, thereby preventing the face or the like of the operator from being struck with the seat back even if the operator carelessly operates the operating lever.

A further object of the present invention is to provide an improved seat reclining system for a vehicular seat, in which fall-forward movement of a seat back of the vehicular seat can be stopped at an intermediate fall-forward position before reaching a full fall-forward position when the locking of the seat back is released by operating an operating level.

The above and other objects of the invention are achieved by a seat reclining system according to claim 1. Preferred embodiments are claimed in the dependent claims.

With the above seat reclining system according to the present invention, when locking between the toothed lever and the toothed member is released upon operating the operating lever, the release lever is once brought into engagement with the stop face formed on the toothed plate so as to stop the seat back at the intermediate fall-forward position even though the seat back rotatably moves or falls forward under the biasing force applied to the seat back. This prevents the seat back from rapidly falling forward toward a full fall-forward position, thereby preventing the face or the like of the operator from being struck with the seat back even if the operator carelessly operates the operating lever. Thereafter, upon rotationally operating the release lever by the operator, the release lever is disengaged from the stop face, and therefore the seat back can be allowed to completely fall forward toward the full fall-forward position under the remaining biasing force applied to the seat back.
Fig. 1 is a fragmentary front elevation of an embodiment of a seat reclining system according to the present invention;
Fig. 2 is fragmentary right side elevation of the seat reclining system of Fig. 1;
Fig. 3 is a fragmentary exploded perspective view of the seat reclining system of Fig. 1;
Fig. 4 is a fragmentary front elevation similar to Fig. 1, but showing an operational mode in which a seat back is in its normal standing position; and
Fig. 5 is a fragmentary front elevation similar to Fig. 1, but showing another operational mode in which the seat back is in its intermediate fall-forward position.

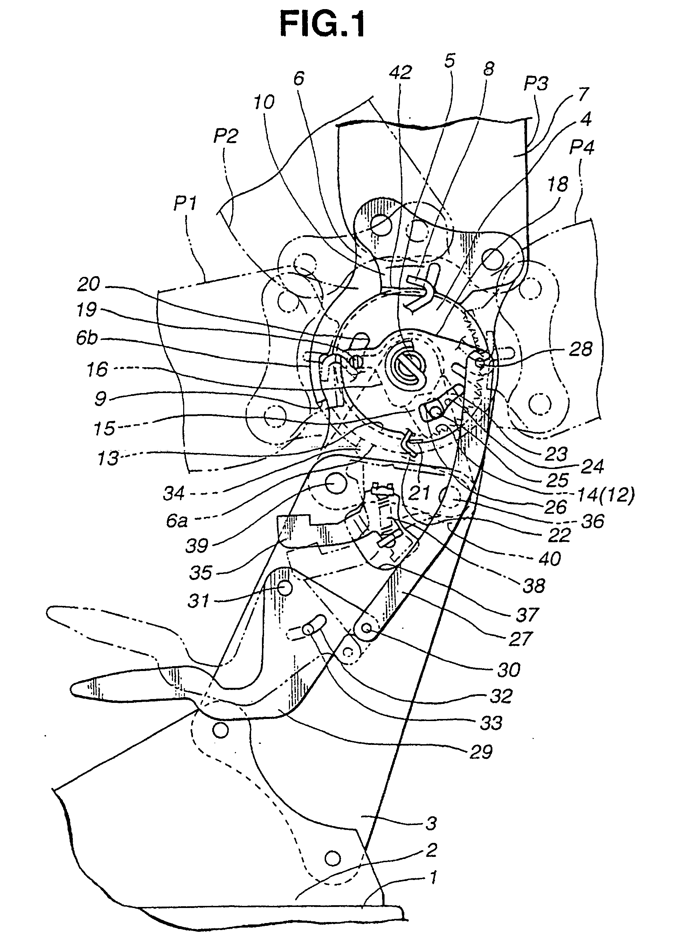

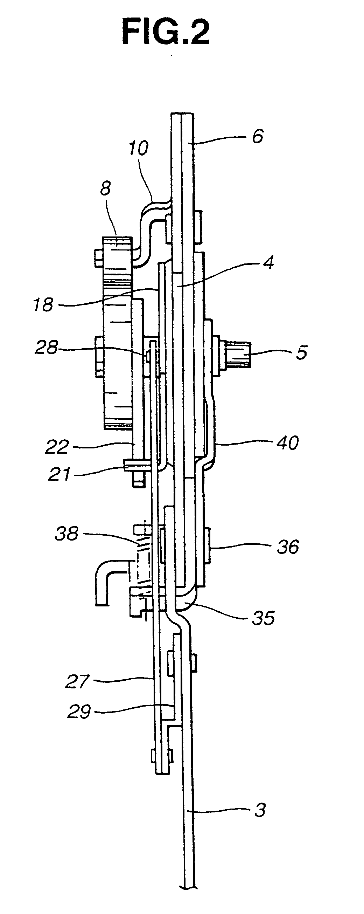

Referring now to Figs. 1 to 3, an embodiment of a seat reclining system according to the present invention is illustrated by the reference character R. In this embodiment, the seat reclining system is for a seat of an automotive vehicle (not shown). The seat reclining system R comprises an auxiliary plate 3 which is fixedly connected to a walk-in base 2 slidably engaged with a guide rail 1 fixed to a vehicle body (not shown). The walk-in base 2 may be fixed directly to a part of the vehicle body. A base plate 4 is fixed to the auxiliary plate 3. A center shaft 5 is fixed to and disposed vertical to the base plate 4. A toothed plate 6 is rotatably mounted on the center shaft 5. A lower section of a seat back 7 is fixedly connected to an upper section of the toothed plate 6.

A spiral spring 8 is provided in such a manner that its inner end section is fixed to the center shaft 5 while its outer end section is engaged with a projection 42 of a spring retaining plate 10 fixed to the toothed plate 6, so that the toothed plate 6 is always biased counterclockwise around the center shaft 5. The toothed plate 6 has a generally circular section (not identified) whose peripheral surface includes a first arcuate peripheral face 6a, and a second arcuate peripheral face 6b. The first peripheral arcuate face 6a forms part, in plan, of a circle whose center corresponds to the center axis of the center shaft 5 and which has a certain radius. The second peripheral arcuate face 6b forms part, in plan, of a circle whose center corresponds to the center axis of the center shaft 5 and which has a radius slightly smaller than that of the first peripheral arcuate face 6a. The first peripheral arcuate face 6a is connected through a radially extending face or stop face 9 to the second peripheral arcuate face 6b, forming a step-like portion. This radially extending face 9 is adapted to be brought into contact with a stopper section 34 of a release lever 35 which will be discussed afterwards, thereby causing the seat back 7 to stop at an intermediate engaging position P2 when the seat back 7 is moved in a direction to fall forward.

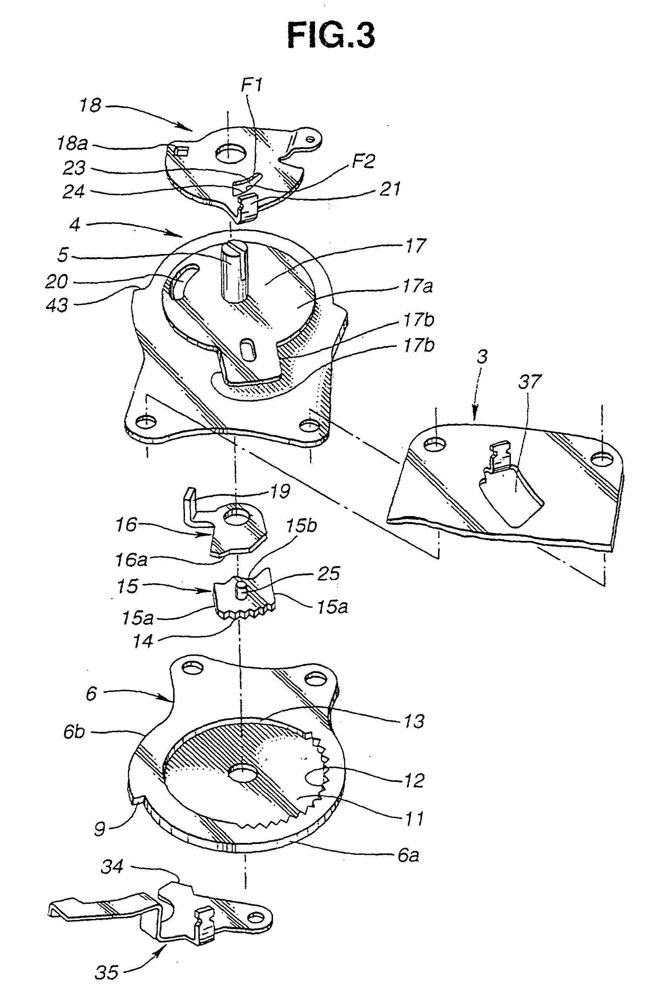

The toothed plate 6 is formed with a circular depression 11 which is formed under embossing. The circular depression 11 has a peripheral surface corresponding, in plan, to a circle whose center corresponds to the axis of the center shaft 5 and which has a certain radius. An arcuate teeth portion 12 and a no-teeth or generally cylindrical portion 13 are formed at the peripheral surface of the circular depression 11. The arcuate teeth portion 12 is connected to the no-teeth portion 13. The arcuate teeth portion 12 is adapted to be able to engage with a teeth portion 14 formed in a toothed member 15 (discussed afterwards) within an operational range of from a normal standing position P3 to a full flat or full fall-rearward position P4 of the seat back 7. The base plate 4 is formed with a depression 17 which generally faces the depression 11 of the toothed plate 6 and formed under embossing. The depression 17 is formed projecting upwardly in Fig. 3 and includes a generally circular section 17a, and a generally rectangular section (not identified) having parallel straight faces 17b, 17b. The circular section 17a has, in plan, a generally C-shaped periphery which forms part of a circle whose center corresponds to the axis of the center shaft 5. The rectangular section is connected to the circular section 17. The depression 17 of the base plate 4 faces and is combined with the annular depression 11 of the toothed plate 6 so as to form a circular space (not identified), when the base plate 4 is combined with the toothed plate 6. Within this circular space, the toothed member 15 and a cam plate 16 are movably accommodated. The toothed member 15 is formed generally rectangular in plan and has parallel opposite flat faces 15a, 15a which are in slidable contact with the parallel straight face 17b, 17b, respectively. The toothed member 15 has the teeth portion 14 extending between the flat faces 15a, and a cam portion 15b located opposite to the teeth portion 14.

The cam plate 16 is rotatably mounted on the center shaft 5 and is formed with an engagement projection 19 which is formed by upwardly bending an extension (not identified) of the cam plate 16. The engagement projection 19 is passed through a generally arcuate opening 20 of the base plate 4 and engaged in an opening 18a formed in a plate 18 which is located at the back side of the base plate 4. The arcuate opening 20 has a longitudinal axis (not shown) which forms part of a circle whose center corresponds to the axis of the center shaft 5 and which has a certain radius. The cam plate 16 has a cam portion 16a which receives a biasing force from a biasing spring 22 (discussed after) so as to be pressed on the cam portion 15b of the toothed member 15, and therefore the teeth portion 14 of the toothed member 15 is brought into engagement with the teeth portion 12 of the toothed plate 6.

The plate 18 is formed with an upwardly bent projection 21 to which an outer end section of the biasing spring 22 is secured so that the plate 18 is biased counterclockwise around the center shaft 5. The biasing spring 22 is a spiral spring and has an inner end section secured to the center shaft 5. The plate 18 is rotatably mounted on the center shaft 5.

Accordingly, the plate 18 and the cam plate 16 are located at the opposite sides of the base plate 4 and movable together as a single member. The plate 18 is formed with a generally arcuate opening 23 whose longitudinal axis forms part of a circle whose center corresponds to the axis of the center shaft 5 and which has a certain radius. The arcuate opening 23 is defined between opposite inner and outer faces F1 and F2 which face to each other. The outer face F2 is not parallel with the inner face F1 and therefore inclined to the inner face F1 so as to form a cam face 24. A pin 25 extending vertically from the toothed member 15 is in slidable contact with the cam face 24, and engaged in an elongate hole 26 which is formed in the base plate 4 and extends radially relative to the center shaft 5.

An upper end section of a link 27 is rotatably connected through a pin 28 to the plate 18. A lower end section of the link 27 is rotatably connected through an axis 30 to an operating lever 29. The operating lever 29 is pivotally connected through a shaft 31 to the auxiliary plate 3. The operating lever 29 is formed with a generally arcuate elongate opening 32 whose longitudinal axis forms part of a circle whose center corresponds to the axis of the shaft 31 and which has a certain radius. A pin 33 extending vertically from the auxiliary plate 3 is engaged in the elongate opening 32 for the purpose of restricting an operational range of the operating lever 29.

A release lever 35 is pivotally connected through an axis 36 to the base plate 4 and has the stopper section 34 which can be brought into contact with the radially extending face 9 of the toothed plate 6. The axis 36 serves also as a connecting pin for connecting the auxiliary plate 3 and the base plate 4. The release lever 35 has an operating end section (no numeral) which is projected out through a window opening 37 formed in the auxiliary plate 3. A spring 38 is extended between a projection (not identified) of the release lever 35 and a projection (not identified) of the auxiliary plate 3. Accordingly, when the seat back 7 is located backward relative to the intermediate fall-forward position P2, the stopper section 34 is always in slidable contact with the first arcuate peripheral face 6a. When the seat back 7 is caused to fall forward relative to the intermediate fall-forward position P2, the stopper section 34 is in slidable contact with the second arcuate peripheral face 6b. A generally triangular holder plate 40 is installed to the base plate 4 through the axis 36 and a pin 39, in which an upper part of the holder plate 40 is mounted around the center shaft 5.

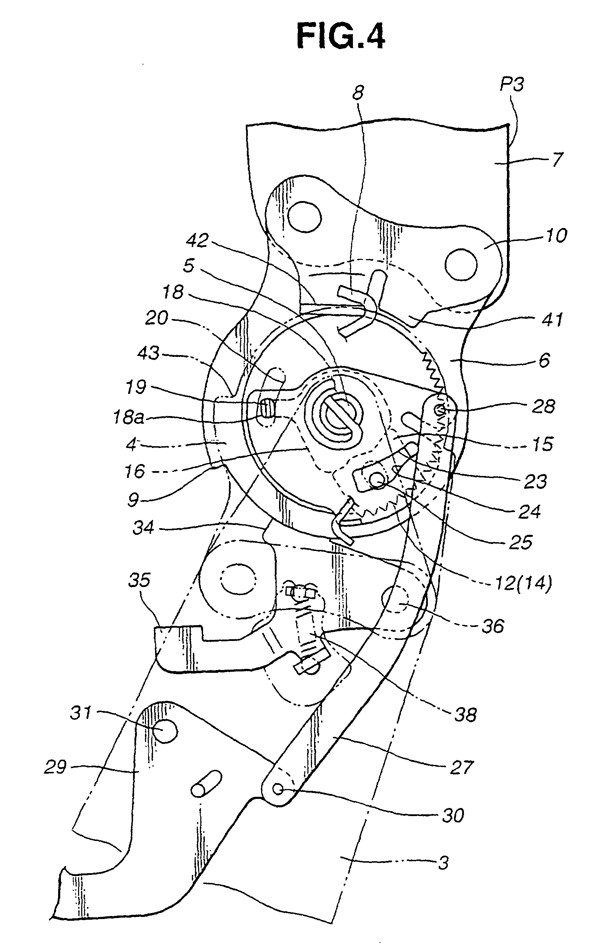

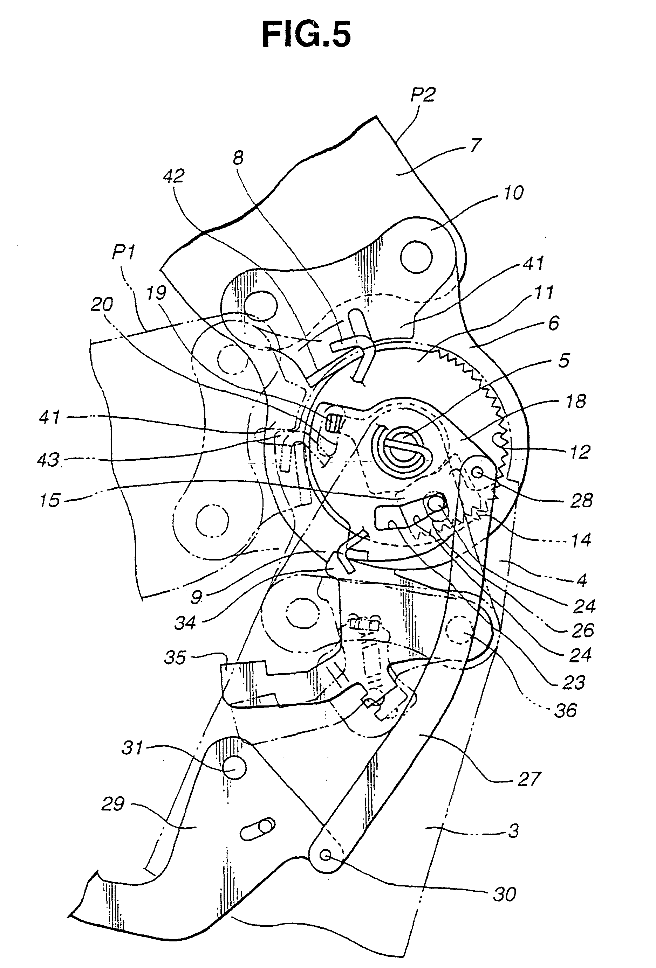

A manner of operation of the seat reclining system R will be discussed with reference to Figs. 4 and 5.

When the operating lever 29 is rotated clockwise around the shaft 31 under a condition where the seat back 7 is in a normal standing position P3 (shown in Fig. 4) made during a normal driving of the vehicle or in a position at which the seat back is inclined backward relative to the normal standing position, the link 27 is moved downward thereby causing the plate 18 to rotate clockwise around the center shaft 5. Accordingly, the arcuate opening 23 is moved around the center shaft 5, and therefore the pin 25 slides along the cam face 24 and then moves radially inward along the elongate opening hole 26 toward the center shaft 5. As a result, engagement between the teeth portions 12, 14 is released, thereby allowing the toothed plate 6 to be freely movable. Then, the toothed plate 6 rotates counterclockwise around the center shaft 5 under the biasing force of the spiral spring 8, upon which the radially extending face 9 is brought into contact with the stopper section 34 of the release lever 35 thereby establishing the intermediate fall-forward position P2 shown in Fig. 5.

Thus, the seat back 7 rotates to incline forward and stops at the intermediate fall-forward position P2 shown in Fig. 5. Consequently, the face or the like of the operator can be prevented from being struck with the seat back 7 even if the operator carelessly operates the operating lever 29. Here, in order to cause the seat back 7 to completely fall forward, the operator rotates the release lever 35 counterclockwise around the axis 36, so that the stopper section 34 is disengaged from the radially extending face 9. Then, the toothed plate 6 rotates counterclockwise around the center shaft 5, and therefore the seat back 7 rotates counterclockwise and further fall forward to take a generally horizontal position of full fall-forward position P1 as indicated in phantom in Fig. 5, since the toothed plate 6 is biased under the remaining biasing force of the spiral spring 8. At this time, a horizontal projection 41 of the spring retaining plate 10 is brought into contact or engagement with a restriction projection 43 of the base plate 4, so that the seat back 7 is prevented from its further rotational movement. At this state, the toothed plate 6 is prevented from being locked in a state to be disabled from its rotation, since the toothed portion 14 of the toothed member 15 faces the no-teeth portion 13.

When the seat back 7 is moved to stand rearward from its forward falling state including the full fall-forward position P1 (indicated in phantom in Fig. 5), the stopper section 34 of the release lever 35 becomes separate from the second arcuate peripheral face 6b and comes into contact with the first arcuate peripheral face 6a so that the seat back 7 can take the intermediate fall-forward position P2. When the seat back 7 is further moved to stand rearward from the intermediate fall-forward position P2, the teeth portion 14 of the toothed member 15 moves from a position to face the no-teeth portion 13 to a position to face the teeth portion 12. Then, the teeth portion 14 of the toothed member 15 is brought into engagement with the teeth portion 12 since the toothed member 15 is always biased to engage with the teeth portion 12 under the biasing force of the biasing spring 22 which force is transmitted through the cam plate 16.

While the radially extending face 9 of the toothed plate 6 has been shown and described as being formed between the first and second arcuate peripheral faces 6a, 6b which are different in radius, in plan, from each other, it will be understood that the first and second arcuate peripheral face 6a, 6b may be the same in radius, in plan, so that no radially extending face 9 or step-like portion is formed between them. Accordingly, the radially extending face 9 may be replaced with a projecting section of the toothed plate 6, and therefore it is sufficient that a projection having an engaging face for the stopper section 34 of the release lever 35 is formed at the outer periphery of the toothed plate 6.

Although the teeth portions 12, 14 of the toothed plate 6 and the toothed member 15 have been shown and described as being formed along the inner periphery of the depression 11 so as to constitute a so-called internal gear type locking mechanism, it will be appreciated that the internal gear type locking mechanism may be replaced with a so-called external gear type locking mechanism (not shown) in which a toothed plate (6) is formed at its outer periphery with a teeth portion which form part, in plan, of a circle whose center corresponds to the axis of a center shaft (5) and which has a certain radius, in which a toothed member (15) having a teeth portion engageable with the teeth portion of the toothed plate 6 is pivotally supported on the base plate 4 and located around the outer periphery of the toothed plate 6.

While the seat reclining system R of the embodiment has been shown and described as being provided with a walk-in mechanism including the walk-in base 2, it will be understood that the principle of the present invention may be applicable to other seat reclining mechanisms without the walk-in mechanism.

As appreciated from the above, the seat reclining system according to the present invention is arranged such that the seat back can be stopped at the intermediate fall-forward position before reaching the full fall-forward position, when the operating lever is operated to be intended to cause the seat back to fall forward. This effectively prevents occurrence of such an accident that the face or the like of the operator is struck with the seat back even if the operator carelessly operates the operating lever. It is to be noted that such advantageous effects can be attained by a simple structure constituted by adding simple and few parts.

## Claims

1. A seat reclining system comprising:
a stationary base plate (4);
a center shaft (5) fixed to said base plate (4);
a toothed plate (6) rotatably mounted on said center shaft (5), a seat back (7) being fixed to said toothed plate (6), said toothed plate (6) having a first teeth portion (12) extending along, in plan, a circle whose center corresponds to an axis of said center shaft (5);
a toothed member (15) having a second teeth portion (14) engageable with said first teeth portion (12);
an operating lever (29) for causing said toothed member (15) to move to be disengageable from said first teeth portion (12);
a biasing mechanism (22) for always biasing the seat back (7) in a direction to fall forward;
**characterised in that** said toothed plate (6) is formed at its periphery with a stop face (9) formed in turn between a first (6a) and a second (6b) peripheral faces of said toothed plate (6) which (6a, 6b) have, in plan, different radius and that said seat reclining system further comprises:
a release lever (35) pivotally connected to said base plate (4) and taking a first position to be biased in a direction to be brought into engagement with the stop face (9) of said toothed plate (6) so as to establish an intermediate fall-forward position of the seat back (7), and a second position to be disengaged from the stop face (9) of said toothed plate (6) upon being operated so as to establish a full fall-forward position of the seat back (7).

2. A seat reclining system as claimed in claim 1, where said toothed plate (6) is formed at its periphery with said first peripheral face (6a) which forms part, in plan, of a first circle whose center corresponds to the axis of said center shaft (5), and said second peripheral face (6b) which forms part, in plan, of a second circle coaxial with the first circle, the second circle being different in radius from the first circle so that the stop face (9) is formed between said first peripheral face (6a) and said second peripheral face (6b).

3. A seat reclining system as claimed in claim 1, wherein said stop face (9) is located at a position where the seat back (7) is positioned at the intermediate fall-forward position which is between a full fall-forward position and a normal standing position.

4. A seat reclining system as claimed in claim 1, wherein said release lever (35) has an operating end section which is operable by an operator, said release lever (35) taking the second position upon operation of said operating end section by the operator.

5. A seat reclining system as claimed in claim 1, further comprising:
an auxiliary plate (3) to which said base plate (4) is fixed with a pin (39) and an axis (36) on which said release lever (35) is rotatably supported:
a cam plate (16) for moving said toothed member (15) in a direction to engage with said first teeth portion (12);
a plate (18) which is rotatable with said cam plate (16) as a one-piece member, said plate (18) and said cam plate (16) being disposed respectively at opposite sides of said base plate (4), said plate (18) being engageable with said toothed member (15) so as to move said toothed member (15) in a direction to disengage from said first teeth portion (12); and
a link (27) for connecting said operating lever (29) to said plate (18), said operating lever (29) being pivotally rotatably supported to said auxiliary plate (3) at a position adjacent said release lever (35), a rotational movement of said operating lever (29) being transmitted through said link (27) to said plate (18).

## Patentansprüche

1. Sitzverstellsystem, das umfasst:
eine stationäre Grundplatte (4);
eine Mittelwelle (5), die an der Grundplatte (4) befestigt ist;
eine mit Zähnen versehene Platte (6), die drehbar an der Mittelwelle (5) angebracht ist, eine Sitzlehne (7), die an der mit Zähnen versehenen Platte (6) befestigt ist, wobei die mit Zähnen versehene Platte (6) einen ersten Zahnabschnitt (12) hat, der sich in Draufsicht an einem Kreis entlang erstreckt, dessen Mittelpunkt einer Achse der Mittelwelle (5) entspricht;
ein mit Zähnen versehenes Element (15) mit einem zweiten Zahnabschnitt (14), der mit dem ersten Zahnabschnitt (12) in Eingriff gebracht werden kann;
einen Betätigungshebel (29), mit dem bewirkt wird, dass sich das mit Zähnen versehene Element (15) so bewegt, dass es von dem ersten Zahnabschnitt (12) getrennt werden kann;
einen Spannmechanismus (22), der die Sitzlehne (17) kontinuierlich in einer Richtung zum Vorwärtsklappen spannt;
**dadurch gekennzeichnet, dass** die mit Zähnen versehene Platte (6) an ihrem Umfang mit einer Anschlagfläche (9) versehen ist, die ihrerseits zwischen einer ersten (6a) und einer zweiten (6b) Umfangsfläche der mit Zähnen versehenen Platte (6) ausgebildet ist, wobei diese (6a, 6b) in Draufsicht verschiedene Radien haben, und dadurch, dass das Sitzverstellsystem des Weiteren umfasst:
einen Lösehebel (35), der schwenkbar mit der Grundplatte (4) verbunden ist und eine erste Position, in der er in einer Richtung gespannt wird, in der er mit der Anschlagfläche (9) der mit Zähnen versehenen Platte (6) in Eingriff gebracht wird, um so eine mittlere Vorwärtsklapp-Position der Sitzlehne (7) herzustellen, sowie eine zweite Position einnimmt, in der er von der Anschlagfläche (9) der mit Zähnen versehenen Platte (6) getrennt wird, wenn er betätigt wird, um so eine vollständige Vorwärtsklapp-Position der Sitzlehne (7) herzustellen.

2. Sitzverstellsystem nach Anspruch 1, wobei die mit Zähnen versehene Platte (6) an ihrem Umfang mit der ersten Umfangsfläche (6a), die in Draufsicht einen Teil eines ersten Kreises bildet, dessen Mittelpunkt der Achse der Mittelwelle (5) entspricht, und der zweiten Umfangsfläche (6b) versehen ist, die in Draufsicht einen zweiten Kreis koaxial zu dem ersten Kreis bildet, wobei der zweite Kreis einen anderen Radius hat als der erste Kreis, so dass die Anschlagfläche (9) zwischen der ersten Umfangsfläche (6a) und der zweiten Umfangsfläche (6b) ausgebildet wird.

3. Sitzverstellsystem nach Anspruch 1, wobei sich die Anschlagfläche (9) an einer Position befindet, an der die Sitzlehne (7) in der mittleren Vorwärtsklapp-Position angeordnet ist, die zwischen einer vollständigen Vorwärtsklapp-Position und einer normalen Standposition angeordnet ist.

4. Sitzverstellsystem nach Anspruch 1, wobei der Lösehebel (35) einen Betätigungs-Endabschnitt hat, der von einer Bedienungsperson betätigt werden kann, und der Lösehebel (35) bei Betätigung des Betätigungs-Endabschnitts durch die Bedienungsperson die zweite Position einnimmt.

5. Sitzverstellsystem nach Anspruch 1, das des Weiteren umfasst:
eine Zusatzplatte (3), an der die Grundplatte (4) mit einem Bolzen (39) und einer Achse (36) befestigt ist, von der der Lösehebel (35) drehbar getragen wird;
eine Nockenplatte (16), die das mit Zähnen versehene Element (15) in einer Richtung bewegt, in der es mit dem ersten Zahnabschnitt (12) in Eingriff kommt;
eine Platte (18), die mit der Nockenplatte (16) als einstückiges Element gedreht werden kann, wobei die Platte (18) und die Nockenplatte (16) jeweils an einander gegenüberliegenden Seiten der Grundplatte (4) angeordnet sind und die Platte (18) mit dem mit Zähnen versehenen Element (15) in Eingriff gebracht werden kann, um das mit Zähnen versehene Element (15) in einer Richtung zu bewegen, in der es von dem ersten Zahnabschnitt (12) getrennt wird; und
ein Verbindungsglied (27), das den Betätigungshebel (29) mit der Platte (18) verbindet, wobei der Betätigungshebel (29) schwenkbar und drehbar von der Zusatzplatte (3) an einer Position an den Lösehebel (35) angrenzend getragen wird, und eine Drehbewegung des Betätigungshebels (29) über das Verbindungsglied (27) auf die Platte (18) übertragen wird.

## Revendications

1. Système d'inclinaison de siège comprenant:
une plaque de base fixe (4);
un arbre central (5) fixé à ladite plaque de base (4) ;
une plaque dentée (6) montée pour une rotation sur ledit arbre central (5), un dossier de siège (7) qui est fixé à ladite plaque dentée (6), ladite plaque dentée (6) comprenant une première partie dentée (12) s'étendant, en plan, le long d'un cercle dont le centre correspond à un axe dudit arbre central (5) ; un élément denté (15) comprenant une deuxième partie dentée (14) susceptible de venir en prise avec ladite première partie dentée (12);
un levier de commande (29) pour amener ledit élément denté (15) à se déplacer de manière à se désengager de ladite première partie dentée (12); un mécanisme de sollicitation (22) servant à solliciter toujours le dossier de siège (7) dans une direction où il s'abaisse vers l'avant;
**caractérisé en ce que** ladite plaque dentée (6) est formée, sur sa périphérie, avec une face de butée (9) également formée entre une première (6a) et une deuxième (6b) faces périphériques de ladite plaque dentée (6), lesquelles (6a, 6b) ont un rayon différent, en plan, et **en ce que** ledit système d'inclinaison de siège comprend en outre:
un levier de désengagement (35) raccordé pour un pivotement à ladite plaque de base (4) et prenant une première position dans laquelle il est sollicité dans une direction où il est amené en engagement avec la face de butée (9) de ladite plaque dentée (6) de manière à établir une position intermédiaire d'abaissement vers l'avant du dossier de siège (7), et une deuxième position dans laquelle il est désengagé de la face de butée (9) de ladite plaque dentée (6) lorsqu'il est actionné, de manière à établir une position d'abaissement complet vers l'avant du dossier de siège (7).

2. Système d'inclinaison de siège selon la revendication 1, dans lequel ladite plaque dentée (6) est formée, sur sa périphérie, avec une première face périphérique (6a) qui, en plan, fait partie d'un premier cercle dont le centre correspond au dit axe dudit arbre central (5), et ladite deuxième face périphérique (6b) qui, en plan, fait partie d'un deuxième cercle coaxial avec le premier cercle, le deuxième cercle étant différent, en rayon, du premier cercle, de sorte que la face de butée (9) est formée entre ladite première face périphérique (6a) et ladite deuxième face périphérique (6b).

3. Système d'inclinaison de siège selon la revendication 1, dans lequel ladite face de butée (9) se trouve à une position dans laquelle le dossier de siège (7) est placé à la position d'abaissement intermédiaire vers l'avant qui se situe entre une position d'abaissement complet vers l'avant et une position redressée normale.

4. Système d'inclinaison de siège selon la revendication 1, dans lequel ledit levier de désengagement (35) comprend une section d'extrémité de commande qui peut être actionnée par un conducteur, ledit levier de désengagement (35) prenant la deuxième position lorsque ladite section d'extrémité de commande est actionnée par le conducteur.

5. Système d'inclinaison de siège selon la revendication 1, comprenant en outre: une plaque auxiliaire (3) à laquelle ladite plaque de base (4) est fixée au moyen d'une broche (39) et d'un axe (36) sur lequel ledit levier de désengagement (35) est supporté pour une rotation:
une plaque à came (16) pour déplacer ledit élément denté (15) dans une direction dans laquelle il vient en prise avec ladite première partie dentée (12);
une plaque (18) qui est susceptible de tourner avec ladite plaque à came (16) en formant un élément un seul tenant, ladite plaque (18) et ladite plaque à came (16) étant placées respectivement au niveau de côtés opposés de ladite plaque de base (4), ladite plaque (18) étant susceptible de venir en prise avec ledit élément denté (15) de manière à déplacer ledit élément denté (15) dans une direction dans laquelle il se désengage de ladite première partie dentée (12); et
un élément de raccordement (27) servant à raccorder ledit levier de commande (29) à ladite plaque (18), ledit levier de commande (29) étant supporté pour un pivotement et pour une rotation par ladite plaque auxiliaire (3) à une position adjacente au dit levier de désengagement (35), un mouvement de rotation dudit levier de commande (29) étant transmis à ladite plaque (18) par l'intermédiaire dudit élément de raccordement (27).
